# DEMANDE DE BREVET EUROPEEN

(11) **EP 2 060 811 A1**
(43) Date de publication de la demande: **20.05.2009**
(21) Numéro de dépôt: 08168386.4
(22) Date de dépôt: 05.11.2008
(51) Int. Cl.: F16C 32/04, G01C 19/24, B64G 1/28

(54) **Palier magnétique centreur à double étages**

(30) Priorité: 16.11.2007 FR 0708054
(71) Demandeur: Thales, 92200 Neuilly-sur-Seine (FR)
(72) Inventeur: Chassoulier, Damien, 06370 Mouans-Sartoux (FR)
(74) Mandataire: Esselin, Sophie

(57) **Abrégé**

La présente invention concerne une structure de centreur magnétique, et plus particulièrement une structure de palier magnétique centreur destiné notamment à des applications spatiales.

La solution proposée dans le présent brevet est adaptée aux centreurs utilisés sur les roues et actionneurs gyroscopiques.

L'invention a pour principale originalité de proposer une structure de palier magnétique à double étages. Selon la mise en oeuvre choisie, cette invention présente l'avantage important d'un gain en termes d'encombrement radial.

## Description

La présente invention concerne une structure de centreur magnétique, et plus particulièrement une structure de palier magnétique centreur destiné notamment à des applications spatiales.

La solution proposée dans le présent document est adaptée aux centreurs utilisés sur les roues et actionneurs gyroscopiques.

Différentes structures de centreurs magnétiques sont connues. Elles reposent généralement sur l'utilisation d'aimants permanents, de bobinages, d'armatures ferromagnétiques et, le plus souvent, d'un circuit électrique d'excitation permettant de contrôler les flux magnétiques générés par les bobinages. Le rôle d'un palier magnétique centreur, est de centrer un corps mobile par rapport à un corps de référence. Plusieurs mouvements du corps mobile par rapport au corps de référence sont ainsi empêchés, ou contrôlés. Si l'on considère un repère orthogonal constitué de trois axes X-X, Y-Y, et Z-Z, centré au centre du dispositif comprenant le centreur magnétique, le corps mobile et le corps de référence ; l'axe Z-Z constituant un axe de révolution du dispositif, et les axes X-X et Y-Y définissant un plan médian du dispositif, il existe alors trois translations selon les axes X-X, Y-Y et Z-Z et trois rotations autour de ces trois mêmes axes.

Différents types de paliers magnétiques centreurs permettent de contrôler les trois translations.

Par ailleurs, le corps mobile conserve au moins un degré de liberté par rapport au corps de référence, généralement une rotation autour de l'axe Z-Z ; dans ce cas, le corps mobile est appelé rotor et le corps de référence stator.

Le plus souvent, les basculements selon les autres axes ne peuvent en revanche être contrôlés que de manière passive.

La plupart des paliers magnétiques centreurs permettent donc de contrôler les trois translations du corps mobile par rapport au corps de référence : selon un axe actif et deux axes passifs, selon deux axes actifs et un axe passif, ou selon trois axes actifs. Cependant, ils présentent, dans l'état de l'art, l'inconvénient d'un encombrement radial important. En effet, des bobinages sont enroulés autours d'axes verticaux, parallèles à l'axe Z-Z, en périphérie du palier ; le retour de ces bobinages ne sert pas à générer de flux magnétique supplémentaire : la présence de ce retour n'est qu'une nécessité physique et augmente l'encombrement radial.

Par ailleurs, dans le but de permettre le contrôle de basculements autour des axes X-X et Y-Y, plusieurs technologies ont été développées. On peut citer à titre d'exemples celles décrites dans les brevets français n°2797477 et n°2797478. Ces paliers magnétiques, qui permettent de contrôler des basculements selon les axes X-X et Y-Y, présentent toujours un encombrement radial très important.

Une autre technologie récente est enseignée dans le brevet européen EP0724086, qui présente un palier magnétique agencé sur deux étages, chaque étage comprenant des bobinages et des aimants permettant de contrôler des flux magnétiques distincts au niveau des entrefers situés respectivement au dessus et au dessous du plan médian du palier magnétique. Cette technologie permet de contrôler des micro-basculements du palier magnétique, éventuellement avec un couple important. Cependant, l'inconvénient lié à l'encombrement radial du palier magnétique est toujours présent, les bobinages étant enroulés autour d'axes de révolutions verticaux. Néanmoins, la présente invention reprend l'idée de l'agencement du palier magnétique sur deux étages.

En résumé, les paliers magnétiques centreurs de l'état de l'art présentent tous au moins l'inconvénient d'un encombrement radial important.

La présente invention propose une solution permettant de résoudre cet inconvénient à travers l'utilisation d'une structure de palier magnétique à double étages particulière, permettant d'assurer des performances comparables aux paliers magnétiques centreurs actuels, mais avec un encombrement radial réduit.

A cet effet, l'invention a pour objet un palier magnétique permettant le centrage d'un corps mobile par rapport à un corps de référence et comportant :
- une première armature ferromagnétique solidaire du corps mobile, à symétrie de révolution, et contenant une pluralité d'aimants répartis annulairement,
- une deuxième et une troisième armatures ferromagnétiques, solidaires du corps de référence, à symétrie de révolution, et supportant une pluralité de bobinages répartis annulairement,
- un circuit d'excitation permettant d'appliquer un courant d'excitation auxdits bobinages,
le palier magnétique étant à symétrie de révolution et présentant un axe de révolution et une hauteur, et possédant par ailleurs un centre, appartenant à l'axe de révolution et situé à la moitié de la hauteur dudit palier magnétique, ainsi qu'un premier et un deuxième axes de références, orthogonaux, s'intersectant au centre du palier magnétique, lesdits premier et deuxième axes de référence définissant un plan médian du palier magnétique orthogonal à l'axe de révolution dudit palier magnétique, **caractérisé en ce que :**
- le palier magnétique est agencé sur deux étages appelés étage supérieur et étage inférieur, les première, deuxième et troisième armatures comprenant par conséquent deux étages, et la pluralité d'aimants étant constituée d'un premier et d'un second ensemble d'aimants, l'étage supérieur contenant le premier ensemble d'aimants répartis annulairement et l'étage inférieur contenant le second ensemble d'aimants répartis annulairement, les premier et second ensembles d'aimants présentant des directions d'aimantation parallèles à l'axe de révolution du palier magnétique et de sens opposé, les première, deuxième et troisième armatures ferromagnétiques étant conçues de telle sorte que trois entrefers annulaires séparent la première armature de la deuxième armature d'une part, et que trois entrefers annulaires séparent la première armature de la troisième armature d'autre part ; et en ce que,
- chaque bobinage est enroulé autour d'un axe de révolution du bobinage contenu dans le plan médian du palier magnétique et passant approximativement par le centre du palier magnétique, cet agencement des bobinages permettant d'exploiter l'intégralité des bobinages présents dans le palier et, en coopération avec la pluralité d'aimants, de contrôler le centrage du corps mobile par rapport au corps de référence pour des mouvements en translation selon les premier et deuxième axes de référence et, de manière passive, selon l'axe de révolution du palier magnétique.

Avantageusement, les bobinages sont répartis par paires, diamétralement opposés, et sont décalés d'environ 90° l'un part rapport à l'autre.

Avantageusement, les aimants sont répartis de façon homogène, décalés de quelques degrés l'un par rapport à l'autre, environ 10° par exemple, sous la forme de secteurs ou sous forme discrète, comme dans un barillet.

Avantageusement, le corps mobile est une roue, dite roue à paliers magnétiques.

Avantageusement, le palier magnétique est monté sur un cardan, constituant un actionneur gyroscopique destiné à être monté sur un satellite.

D'autres caractéristiques et avantages de l'invention apparaîtront à l'aide de la description qui suit faite en regard des dessins annexés qui représentent :
- la figure 1 : le schéma d'un palier magnétique centreur classique, selon l'état de l'art ;
- la figure 2 : le schéma d'un palier magnétique centreur à double étages selon l'invention.

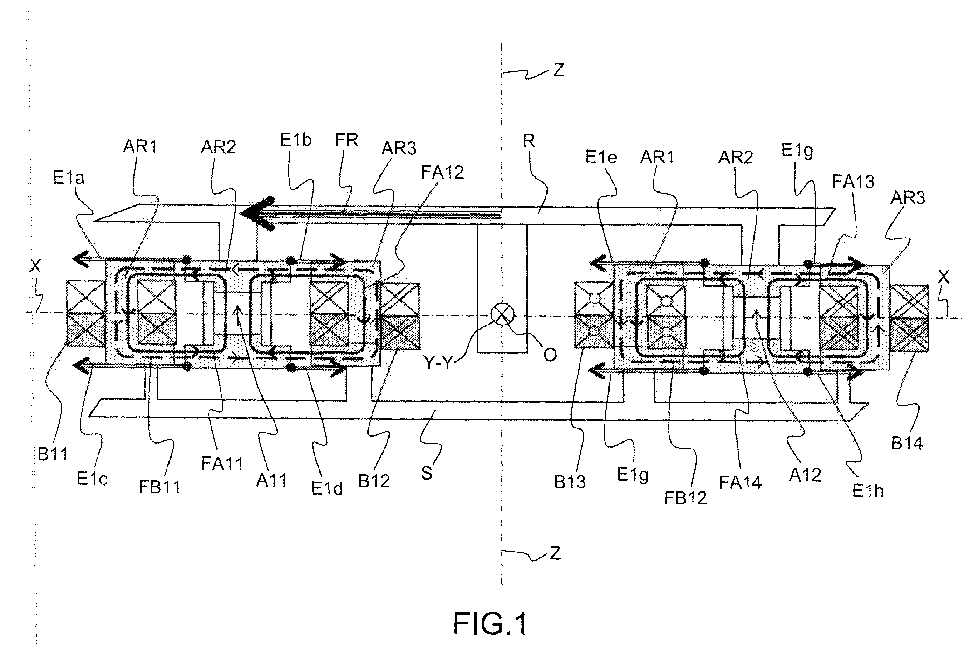

La figure 1 présente un schéma d'une structure de palier magnétique centreur de l'état de l'art. Ce palier magnétique, de centre O, est à symétrie de révolution autour de son axe de révolution Z-Z. II permet la libre rotation autour de l'axe Z-Z du corps mobile, ou rotor, R par rapport au corps de référence, ou stator, S. Les axes de références X-X et Y-Y s'intersectent au centre du palier O et définissent un plan médian du palier magnétique.

Ce palier comprend trois armatures ferromagnétiques AR1, AR2 et AR3, toujours à symétrie de révolution autour de Z-Z. On constate que des entrefers annulaires séparent l'armature AR2 de l'armature AR1 d'une part et de l'armature AR3 d'autre part.

L'armature centrale AR2 comprend une pluralité d'aimants A11, A12 répartis annulairement de façon homogène ; ces aimants A11, A12 présentent la même direction d'aimantation. Les armatures AR1 et AR3 supportent une pluralité de bobinages B11, B12, B13, B14 également répartis annulairement et présentant un axe de révolution parallèle à l'axe de révolution du palier Z-Z.

Les aimants A11, A12 génèrent des premiers flux magnétiques FA11, FA12, FA13, FA14 tandis que les bobines génèrent des seconds flux magnétiques FB11, FB12. Du fait de l'interaction entre ces flux magnétiques, en cas de décentrage du corps mobile R par rapport au corps de référence S, des efforts E1a à E1h s'exercent au niveau des entrefers et la résultante de ces efforts, FR, contribue à recentrer ou à amplifier le décentrage du rotor R par rapport au stator S.

En appliquant un courant d'excitation adéquate aux bobinages B11, B12, B13, B14 à l'aide d'un circuit d'excitation, il est possible de contrôler le centrage du corps mobile R par rapport au corps de référence S.

Cette structure permet de maîtriser les translations selon les axes X-X et Y-Y. L'axe Z-Z est quant à lui stabilisé de manière passive, de même que les basculements.

Par ailleurs, les retours des bobinages B11, B12, B13, B14, situés en périphérie du palier ne permettent pas directement de générer des flux magnétiques. Leur présence est une nécessité physique ; elle augmente l'encombrement radial du dispositif.

En résumé, cette structure de palier magnétique centreur, caractéristique de l'état de l'art, permet de mettre en lumière le défaut de la plupart des technologies connues : l'encombrement radial important. Comme cela a été expliqué précédemment, le dispositif du brevet européen EP0724086, permettant de transmettre des couples importants en basculement, conserve également le défaut d'un encombrement radial important.

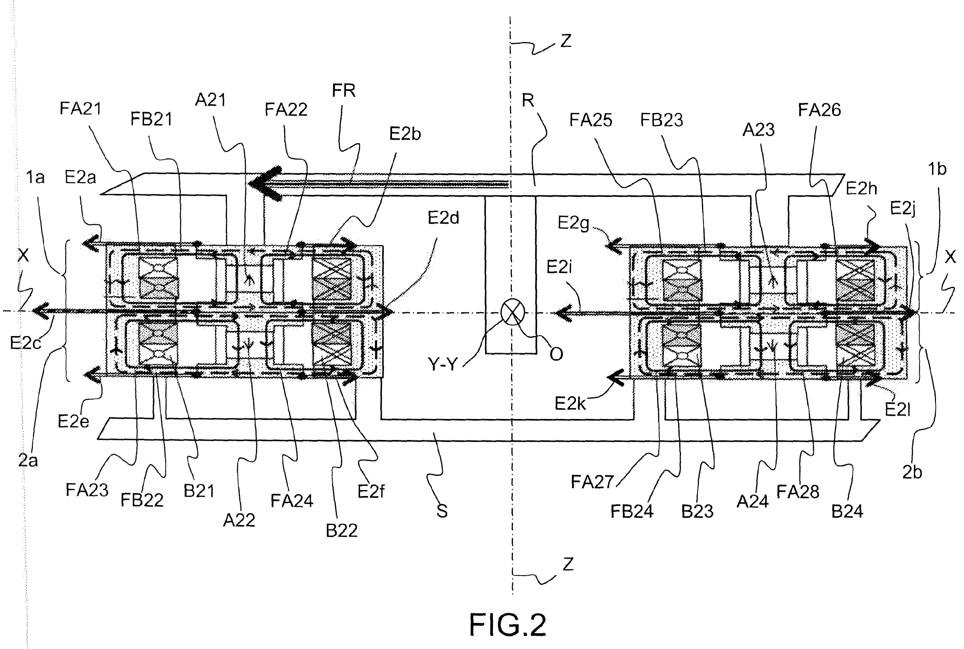

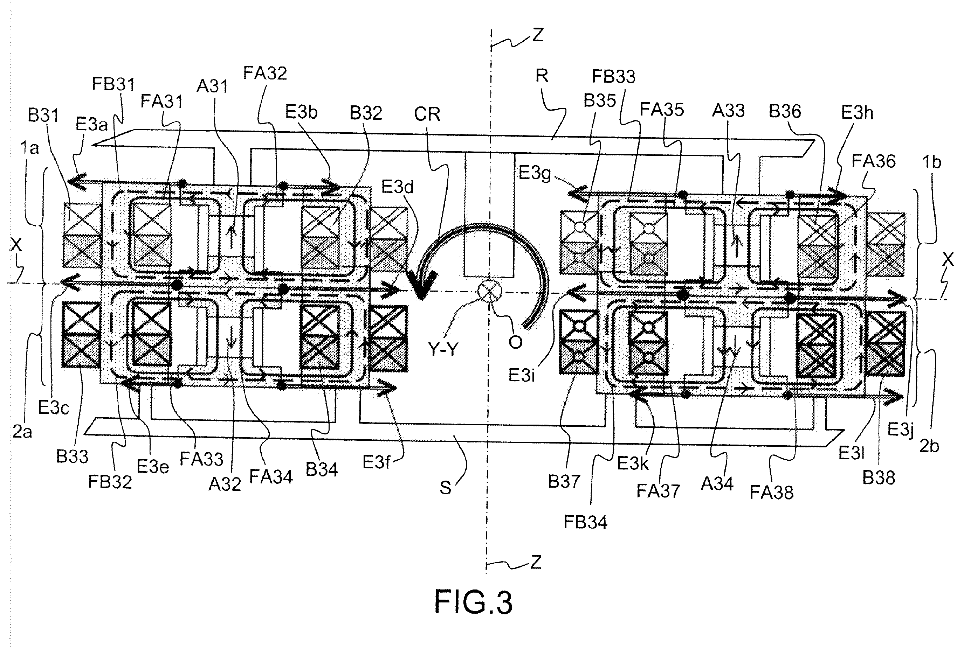

La figure 2 illustre la possibilité de réduire l'encombrement radial d'un palier magnétique centreur grâce à une structure à double étages constituant le cour de la présente invention.

Le palier magnétique centreur est donc ici agencé sur deux étages. L'étage supérieur 1a-1b et l'étage inférieur 2a-2b. Les bobinages B21, B22, B23 et B24 sont enroulés autour de leur axe de révolution contenu dans le plan médian du palier magnétique, défini par les axes X-X et Y-Y, et passant par le centre O du palier. Ces bobinages B21, B22, B23 et B24 peuvent être redondés. L'agencement du palier magnétique sur deux étages entraîne par ailleurs la mise en place de trois entrefers annulaires séparant l'armature ferromagnétique AR2 de l'armature ferromagnétique AR1 d'une part et de trois autres entrefers annulaires séparant l'armature ferromagnétique AR2 de l'armature ferromagnétique AR3 d'autre part.

Chacun des deux étages comporte également un ensemble d'aimants A21 à A24 répartis annulairement. Ces aimants A21 à A24 présentent des directions d'aimantation parallèles à l'axe de révolution du palier, Z-Z, et de sens opposé s'ils n'appartiennent pas au même étage.

Ces bobinages et ces aimants ainsi positionnés génèrent des flux magnétiques. Les bobinages créent des flux FB21, FB22, FB23, FB24, sur les deux étages du palier. Ainsi, l'intégralité des bobinages est utile à la génération du flux magnétique global créé au sein du palier : l'efficacité du palier magnétique est donc augmentée à masses ou encombrements équivalents. Il est également possible de réduire, à performances équivalentes, l'encombrement radial, c'est-à-dire l'encombrement selon le plan défini par X-X et Y-Y, par rapport à celui du palier magnétique de la figure 1.

Par ailleurs, les aimants génèrent des flux magnétiques FA21 à FA28. L'ensemble des flux magnétiques créés au sein du palier magnétique par les bobines et les aimants se comportent ensuite comme cela a été précédemment décrit pour la figure 1 : les efforts E2a à E21 s'exerçant aux niveaux des entrefers se traduisent par la force résultante FR, qui contribue à recentrer ou à amplifier le décentrage du rotor R par rapport au stator S.

De plus, en appliquant un courant d'excitation adéquate aux bobinages B11, B12, B13, B14 à l'aide d'un circuit d'excitation, il est toujours possible de contrôler le centrage du corps mobile R par rapport au corps de référence S.

En résumé, grâce à un agencement sur deux étages, on réduit l'encombrement radial du palier magnétique centreur ou on augmente son efficacité.

Ceci constitue la principale originalité de l'invention. Une fois mis en oeuvre, le palier magnétique selon l'invention présente l'avantage d'un gain en termes d'encombrement ou de rendement.

## Revendications

1. Palier magnétique permettant le centrage d'un corps mobile (R) par rapport à un corps de référence (S) et comportant :
• une première armature ferromagnétique (AR2) solidaire du corps mobile (R), à symétrie de révolution, et contenant une pluralité d'aimants (A21-A24, A31-A34) répartis annulairement,
• une deuxième (AR1) et une troisième (AR3) armatures ferromagnétiques, solidaires du corps de référence (S), à symétrie de révolution, et supportant une pluralité de bobinages (B21-824, B31-B38) répartis annulairement,
• un circuit d'excitation permettant d'appliquer un courant d'excitation auxdits bobinages (B21-B24, B31-B38),
le palier magnétique étant à symétrie de révolution et présentant un axe de révolution (Z-Z) et une hauteur, et possédant par ailleurs un centre (O), appartenant à l'axe de révolution (Z-Z) et situé à la moitié de la hauteur dudit palier magnétique, ainsi qu'un premier (X-X) et un deuxième (Y-Y) axes de références, orthogonaux, s'intersectant au centre (O) du palier magnétique, lesdits premier (X-X) et deuxième (Y-Y) axes de référence définissant un plan médian du palier magnétique orthogonal à l'axe de révolution (Z-Z) dudit palier magnétique, **caractérisé en ce que :**
• le palier magnétique est agencé sur deux étages appelés étage supérieur (1a-1b) et étage inférieur (2a-2b), les première (AR2), deuxième (AR1) et troisième (AR3) armatures comprenant par conséquent deux étages, et la pluralité d'aimants (A21-A24, A31-A34) étant constituée d'un premier (A21, A23, A31, A33) et d'un second (A22, A24, A32, A34) ensemble d'aimants, l'étage supérieur (1a-1b) contenant le premier ensemble d'aimants (A21, A23, A31, A33) répartis annulairement et l'étage inférieur (2a-2b) contenant le second ensemble d'aimants (A22, A24, A32, A34) répartis annulairement, les premier (A21, A23, A31, A33) et second (A22, A24, A32, A34) ensembles d'aimants présentant des directions d'aimantation parallèles à l'axe de révolution (Z-Z) du palier magnétique et de sens opposé, les première (AR2), deuxième (AR1) et troisième (AR3) armatures ferromagnétiques étant conçues de telle sorte que trois entrefers annulaires séparent la première armature (AR2) de la deuxième armature (AR1) d'une part, et que trois entrefers annulaires séparent la première armature (AR2) de la troisième armature (AR3) d'autre part ; et **en ce que**,
• chaque bobinage (B21-B24) est enroulé autour d'un axe de révolution du bobinage contenu dans le plan médian du palier magnétique et passant approximativement par le centre (O) du palier magnétique, cet agencement des bobinages (B21-B24) permettant d'exploiter l'intégralité des bobinages (B21-B24) présents dans le palier et, en coopération avec la pluralité d'aimants, (A21-A24) de contrôler le centrage du corps mobile (R) par rapport au corps de référence (S) pour des mouvements en translation selon les premier (X-X) et deuxième (Y-Y) axes de référence et, de manière passive, selon l'axe de révolution (Z-Z) du palier magnétique.

2. Palier magnétique selon la revendication 1, **caractérisé en ce que** les bobinages (B21-B24, B31-B38) sont répartis par paires, diamétralement opposés, et sont décalés d'environ 90° l'un part rapport à l'autre.

3. Palier magnétique selon l'une quelconque des revendications 1 à 2, **caractérisé en ce que** les aimants (A21-A24, A31-A34) sont répartis de façon homogène, décalés de quelques degrés l'un par à rapport l'autre, environ 10° par exemple, sous la forme de secteurs ou sous forme discrète, comme dans un barillet.

4. Palier magnétique selon l'une quelconque des revendications 1 à 3, **caractérisé en ce que** le corps mobile (R) est une roue, dite roue à paliers magnétiques.

5. Actionneur gyroscopique comportant un cardan, **caractérisé en ce qu'**il comprend un palier magnétique selon l'une quelconque des revendications 1 à 4 monté sur ledit cardan, ledit actionneur gyroscopique pouvant être intégré à un satellite.
